# EUROPEAN PATENT APPLICATION

(11) **EP 2 658 193 A2**
(43) Date of publication of application: **30.10.2013**
(21) Application number: 13156671.3
(22) Date of filing: 26.02.2013
(51) Int. Cl.: H04L 12/751

(54) **Method and apparatus for sending topology change packet, and method and apparatus for updating forwarding table**

(30) Priority: 27.04.2012 CN 201210128482
(71) Applicant: Huawei Technologies Co., Ltd., Longgang District, Shenzhen Guangdong 518129 (CN)
(72) Inventor: Yan, Jiajun, 518129 Shenzhen (CN); Huang, Jianbing, 518129 Shenzhen (CN)
(74) Representative: Körber, Martin Hans

(57) **Abstract**

Embodiments of the present invention disclose a method for sending a topology change packet, and a method and an apparatus for updating a forwarding table. When a first switch in a ring network detects that a link is faulty, the first switch constructs a topology change (TC) packet, where the TC packet includes a fault identifier; and the first switch sends the TC packet, so that a second switch in the ring network receiving the TC packet updates a forwarding table according to the fault identifier. The embodiments of the present invention solve the technical problem that a switch receiving a TC packet needs to update a forwarding table at least twice for the same fault in a ring network.

## Description

### FIELD

The present invention relates to the field of network technologies, and in particular, to a method and an apparatus for sending a topology change packet, and a method and an apparatus for updating a forwarding table.

### BACKGROUND

After a link of an Ethernet ring network is faulty, switches on two sides of the fault point detect the faulty link and send a scheduled topology change (TC) packet within a protocol to notify the link fault. Switches receiving the TC packet need to update forwarding tables thereof, thereby directing traffic to be forwarded via new links.

When there are multiple protocols in the Ethernet network, an edge switch forwards a TC packet of the protocol through an edge port to notify other protocols of the topology change time of the protocol; and switches in other protocols update forwarding tables maintained thereby to direct the recovery of forwarding traffic.

During studying and implementing the prior art, the inventor of the present invention finds that in the existing implementation manner, when an Ethernet ring network is faulty, because both switches on two sides of the link fault point detect the link fault, the switches on two sides of the link fault point respectively send a TC packet which is sent to an adjacent network through edge switches. In other words, when the Ethernet ring network is faulty, multiple TC packets are forwarded. Each switch updates the forwarding table at least twice. Each time the forwarding table is updated, Layer-2 traffic in the network is broadcast and forwarded; meanwhile, processors in the Ethernet switches frequently clear forwarding tables, thereby affecting interaction processing of information in other protocols.

### SUMMARY

The present invention provides a method and an apparatus for sending a topology change packet, and a method and an apparatus for updating a forwarding table, thereby solving the technical problem in the prior art that a switch needs to update a forwarding table at least twice for a same fault.

In order to solve the above technical problem, a first aspect of the present invention provides a method for sending a topology change packet, where the method includes:
when a first switch in a ring network detects that a link is faulty, constructing, by the first switch, a topology change (TC) packet, where the TC packet includes a fault identifier; and
sending, by the first switch, the TC packet, so that a second switch in the ring network receiving the TC packet updates a forwarding table according to the fault identifier.

In a first implementation of the first aspect, the sending the TC packet specifically includes sending the TC packet once or consecutively sending the TC packet multiple times.

Based on the first aspect or the first implementation of the first aspect, in a second implementation of the first aspect, the fault identifier includes a protocol type, a domain identifier, a ring identifier, a protection instance, a hold time, and a system bridge media access control, MAC, address.

A second aspect of the present invention provides a method for updating a forwarding table, where the method includes:
receiving, by a second switch in a ring network, a topology change (TC) packet sent by a first switch in the ring network, where the TC packet includes a fault identifier; and
determining, by the second switch, whether the fault identifier has been buffered, and if the fault identifier has not been buffered, updating a forwarding table according to the fault identifier.

In a first implementation of the second aspect, the fault identifier includes a protocol type, a domain identifier, a ring identifier, a protection instance, a hold time, and a system bridge media access control, MAC, address.

In a second implementation of the second aspect, the method further includes: if the fault identifier exists, not updating, by the second switch, the forwarding table.

Based on the second aspect or the first or second implementation of the second aspect, in a third implementation of the second aspect, the method further includes:
buffering, by the second switch, the fault identifier, and recording a time at which the fault identifier is received in an entry corresponding to the fault identifier.

Based on the third implementation of the second aspect, the method further includes:
extracting, by the second switch, current system time;
traversing, by the second switch, entries in a buffer; and
for each entry, determining whether a difference between the current system time and a time at which the fault identifier in the entry is received is greater than the hold time; if yes, deleting the entry; otherwise, continuing traversing the entries in the buffer.

A third aspect of the present invention provides an apparatus for sending a topology change packet, where the apparatus includes:
a constructing unit, configured to construct, when a first switch in a ring network detects that a link is faulty, a topology change (TC) packet, where the TC packet includes a fault identifier; and
a transmitter, configured to send the TC packet, so that a second switch in the ring network receiving the TC packet updates a forwarding table according to the fault identifier.

In a first implementation of the third aspect, the transmitter is specifically configured to send the TC packet once or consecutively send the TC packet multiple times.

Based on the third aspect or the first implementation of the third aspect, in a second implementation of the first aspect, the fault identifier includes a protocol type, a domain identifier, a ring identifier, a protection instance, a hold time, and a system bridge media access control, MAC, address.

A fourth aspect of the present invention further provides an apparatus for updating a forwarding table, where the apparatus includes:
a receiver, configured to receive a topology change (TC) packet sent by a first switch in a ring network, where the TC packet includes a fault identifier;
a determining unit, configured to determine whether a second switch in the ring network has buffered the fault identifier; and
a updating unit, configured to update, when the determining unit determines that the second switch has not buffered the fault identifier, a forwarding table according to the fault identifier.

In a first implementation of the fourth aspect, the apparatus further includes:
a buffer, configured to buffer the fault identifier after the updating unit updates the forwarding table; and
a recording unit, configured to record, when the buffer buffers the fault identifier, a time at which the fault identifier is received in an entry corresponding to the fault identifier.

Based on the first implementation of the fourth aspect, in a second implementation of the fourth aspect, the fault identifier buffered by the buffer includes a protocol type, a domain identifier, a ring identifier, a protection instance, a hold time, and a system bridge media access control, MAC, address.

Based on the second implementation of the fourth aspect, in a third implementation of the fourth aspect, the apparatus further includes:
an extracting unit, configured to extract current system time;
a traversing unit, configured to traverse entries in the buffer; and
a processing unit, configured to determine, for each entry traversed by the traversing unit, whether a difference between the current system time and a time at which the fault identifier is received in the entry is greater than the hold time; if yes, delete the entry; otherwise, trigger the traversing unit to continue traversing entries in the buffer.Based on the above technical solutions, in the embodiments of the present invention, when a link in a ring network is faulty, switches (uniformly referred to as first switches) on two sides of the fault point detect the fault, then construct a TC packet including a fault identifier, and send the TC packet to a second switch; the second switch determines whether the fault identifier has been buffered therein according to the fault identifier in the TC packet, and if the fault identifier has not been buffered therein, updates a forwarding table maintained by the second switch. In other words, the embodiments of the present invention solve the problem in the prior art that a switch needs to update a forwarding table at least twice for the same fault, that is, the number of times for updating the forwarding table is reduced, thereby improving the efficiency for updating the forwarding table.

### BRIEF DESCRIPTION OF THE DRAWINGS

To describe the technical solutions in the embodiments of the present invention more clearly, the following introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a method for sending a topology change packet according to an embodiment of the present invention;
FIG. 2 is a flowchart of a method for updating a forwarding table according to an embodiment of the present invention;
FIG. 3 is a flowchart of another method for updating a forwarding table according to an embodiment of the present invention;
FIG. 4 is a flowchart of a method for periodically processing a fault identifier in a buffer according to an embodiment of the present invention;
FIG. 5 is a schematic structural diagram of an apparatus for sending a topology change packet according to an embodiment of the present invention;
FIG. 6 is a schematic structural diagram of an apparatus for updating a forwarding table according to an embodiment of the present invention; and
FIG. 7 is a second schematic structural diagram of an apparatus for updating a forwarding table according to an embodiment of the present invention.

### DETAILED DESCRIPTION OF THE EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

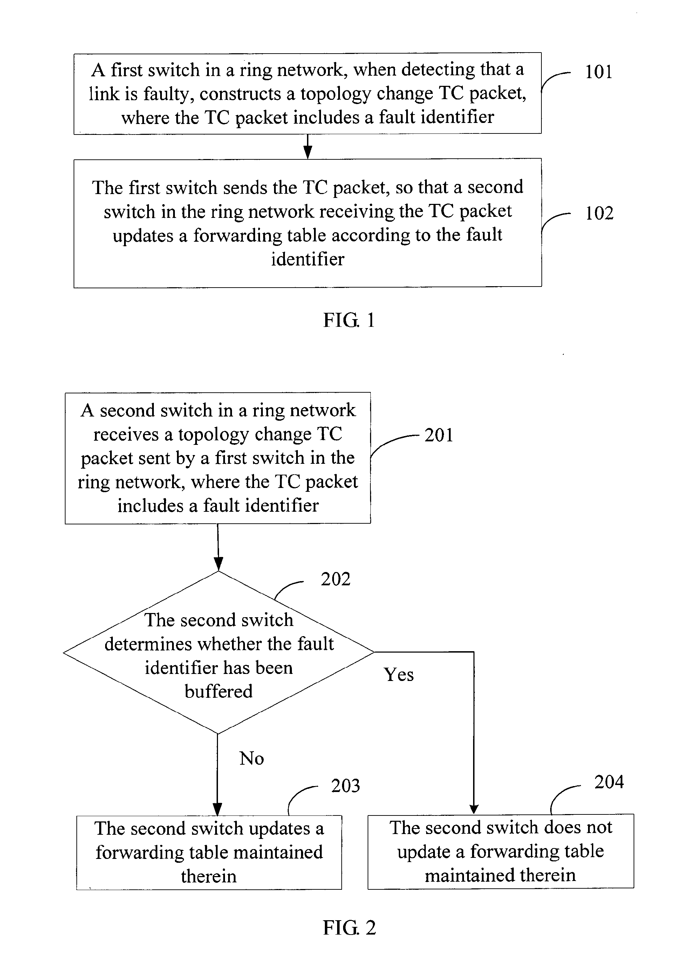

FIG. 1 is a flowchart of a method for sending a topology change packet according to an embodiment of the present invention. The method includes the following steps.

Step 101: When a first switch in a ring network detects that a link is faulty, construct a topology change (TC) packet, where the TC packet includes a fault identifier (FaultID).

In this step, both switches on two sides of the link fault point may detect the link fault, and the switches on the two sides each constructs a topology change (TC) packet including the fault identifier, and send the TC packet respectively.

The fault identifier may include a protocol type, a domain identifier, a ring identifier, a protection instance, a hold time (HoldTime, also referred to as aging time), and a system bridge media access control (MAC) address, but is not limited thereto, and may be added or decreased according to actual situations, which is not limited in this embodiment. The system bridge MAC address refers to a MAC address of a master node or a root bridge (abstracted as a managing node) of the ring network.

In this embodiment, the protocol type may include a type of Ethernet ring protection protocol packets, such as a Spanning Tree Protocol (STP), a Rapid Ring Protection Protocol (RRPP), or an improved clustering protocol (for example, Smart Ethernet Protection(SEP)); and definitely may also be other network protocols, which is not limited in this embodiment. The domain identifier refers to an ID of a domain to which the packet belongs. The ring identifier refers to an ID of a ring to which the packet belongs. The protection instance is a set of a group of VLANs protected by a protocol. The hold time is a duration for storing the fault in the buffer, that is, if a duration in which the fault is stored since a time at which the fault occurs exceeds the hold time, the fault identifier corresponding to the fault is deleted from the buffer.

In this embodiment, the process of constructing, by the switch detecting the faulty link, the TC packet including the fault identifier is: defining the field FaultID = fault type (STP/RRPP/SEP/Others) + domain identifier + ring identifier + protection instance + hold time (HoldTime) (the hold time is set according to the protocol type) + system bridge media access control (MAC) address. For example, a fault identifier is shown in table 1.

**Table 1**

| Field | Value |
|---|---|
| Protocol type | **STP/RRPP/SEP/Others** |
| Domain name | Region Name |
| Ring ID | 1 |
| Protection instance | 0 |
| HoldTime | 2000 |
| System bridge MAC address | XXXXXX |

Step 102: The first switch sends the TC packet, so that a second switch in the ring network receiving the TC packet updates a forwarding table according to the fault identifier, where in this embodiment, the forwarding table is also referred to as an address forwarding table. The forwarding table may include a MAC table, an Address Resolution Protocol (ARP, Address Resolution Protocol) table, a Layer-2 multicast table, and the like. The updating the forwarding table refers to, after the TC packet including the fault identifier is received, aging out and deleting the MAC table, the ARP table, the Layer-2 multicast table, and the like.

In this embodiment, the first switch may send the TC packet once, so that the second switch receiving the TC packet updates the forwarding table. Assuredly, in order to improve the reliability and avoid loss, the TC packet may also be sent consecutively multiple times; however, the second switch receiving the TC packet including the fault identifier updates the forwarding table only once. The specific process thereof is shown in FIG 2.

FIG. 2 is a flowchart of a method for updating a forwarding table according to an embodiment of the present invention. The method includes the following steps.

Step 201: A second switch in a ring network receives a topology change (TC) packet sent by a first switch in the ring network, where the TC packet includes a fault identifier.

The fault identifier may include a protocol type, a domain identifier, a ring identifier, a protection instance, a hold time, and a system bridge media access control (MAC) address, but is not limited thereto, and may be adaptively modified according to actual application situations.

Step 202: The second switch determines whether the fault identifier has been buffered; if not, step 203 is executed; and if yes, step 204 is executed.

In other words, the second switch, after receiving the TC packet, does not directly update a forwarding table maintained therein; instead, it first determines whether the fault identifier is stored in a buffer. If the fault identifier exists, no processing on the fault identifier is required, that is, the forwarding table maintained by the second switch is not updated; if the fault identifier does not exist, the forwarding table needs to be updated.

Step 203: The second switch updates the forwarding table maintained therein.

Step 204: The second switch does not update the forwarding table maintained therein.

In this embodiment, the forwarding table may include a media access control (MAC) address, an ARP table, a Layer-2 multicast table, and the like.

In other words, in this embodiment, the second switch receiving the TC packet first parses FaultID in the packet to determine whether the second switch has buffered the fault identifier; updates the forwarding table maintained by the second switch if the second switch has not buffered the fault identifier; or does not update the forwarding table repeatedly if the second switch has buffered the fault identifier. That is, for the same fault, the forwarding table is updated only once, thereby improving the efficiency for updating the forwarding table.

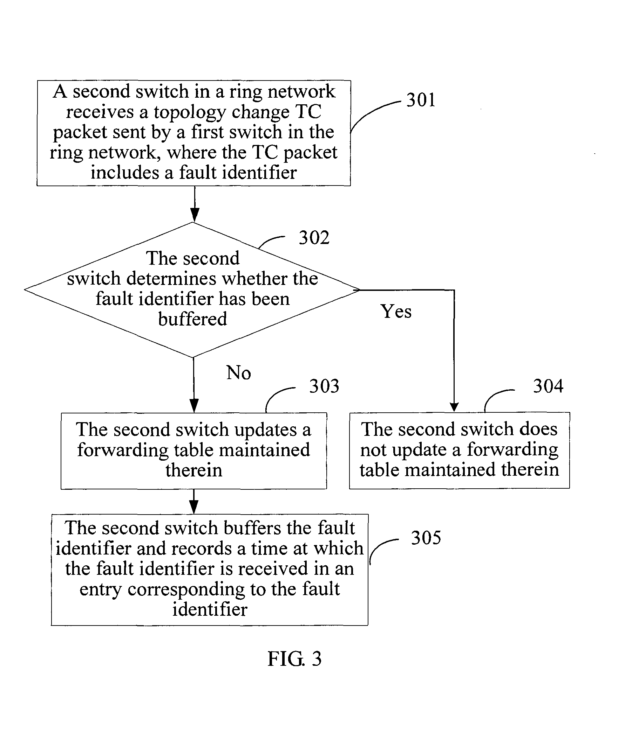

FIG. 3 is a flowchart of another method for updating a forwarding table according to an embodiment of the present invention. In this embodiment, step 301 to step 304 are the same as step 201 to step 204, and for details, refer to the above description. Based on FIG. 2, the method further includes:
Step 305: The second switch buffers the fault identifier, and records a time at which the fault identifier is received in an entry corresponding to the fault identifier.

The time at which the fault identifier is received may be a system time at which the second switch buffers the fault identifier.

In this embodiment, the second switch receiving the TC packet first parses FaultID in the packet to determine whether the second switch itself has buffered the fault identifier; if the second switch itself has not buffered the fault identifier, updates the forwarding table maintained by the second switch, buffers the fault identifier, and records a time at which the fault identifier is received, where the fault identifier and the time at which the fault identifier is received is stored in the same entry; or if the second switch has buffered the fault identifier, does not update the forwarding table repeatedly. That is, for the same fault, the forwarding table is updated only once, thereby improving the efficiency for updating the forwarding table.

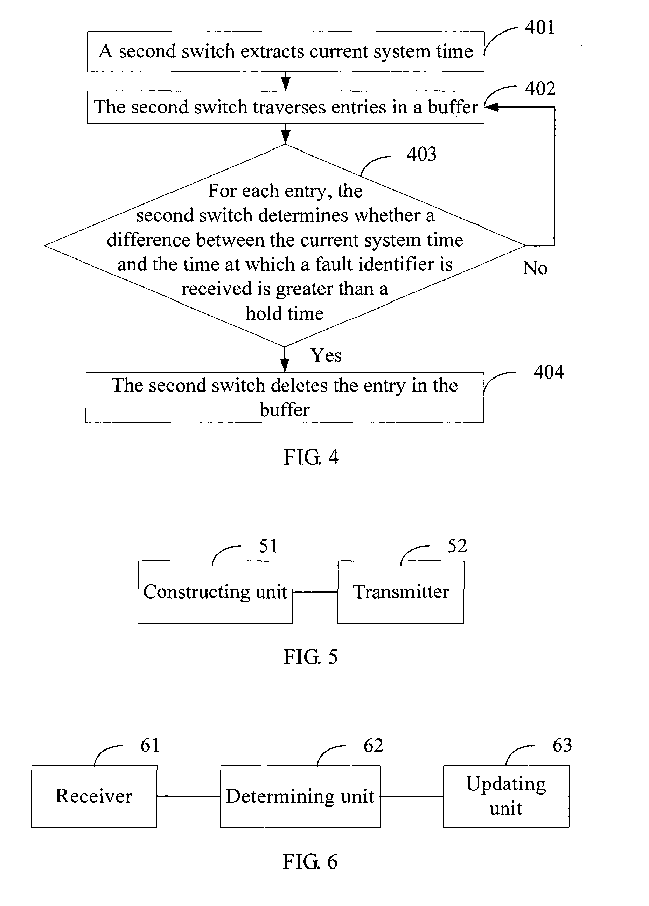

Optionally, in order to prevent the fault identifier from being stored in the buffer permanently, the embodiment of the present invention further provides a method for periodically processing a fault identifier in the buffer, where the flowchart thereof is shown in FIG. 4. The method includes:
Step 401: The second switch extracts current system time;
Step 402: The second switch traverses entries in the buffer;
Step 403: for each entry, the second switch determines whether a difference between the current system time and the time at which the fault identifier is received is greater than a hold time; if yes, executes step 404; otherwise, returns to step 402, that is, continues traversing the entries in the buffer; and
Step 404: The second switch deletes the entry in the buffer.

The embodiment of the present invention, based on the method for updating the forwarding table, further provides an aging mechanism for faults in the buffer. That is, the second switch receiving the TC packet ages out the stored fault identifiers according to the HoldTime; if the duration of a stored fault identifier since the time at which the fault occurs exceeds the HoldTime, the buffered fault identifier is deleted, thereby saving buffer spaces.

Based on the implementation process of the above method, an embodiment of the present invention further provides an apparatus for sending a topology change packet which is used to implement the method shown in FIG 1. The detailed schematic structural diagram thereof is shown in FIG. 5. The apparatus includes a constructing unit 51 and a transmitter 52, where the constructing unit 51 is configured to construct, when a first switch in a ring network detects that a link is faulty, a topology change (TC) packet, where the TC packet includes a fault identifier, and the fault identifier may include a protocol type, a domain identifier, a ring identifier, a protection instance, a hold time, and a system bridge media access control (MAC) address; and the transmitter 52 is configured to send the TC packet, so that a second switch in the ring network receiving the TC packet updates a forwarding table according to the fault identifier.

The transmitter 52 is specifically configured to send the TC packet once; or consecutively send the TC packet multiple times, for example, consecutively send the TC packet twice or consecutively send the TC packet three times. However, the switch receiving the TC packet updates the forwarding table only once.

For the implementation process of the functions and uses of the units in the apparatus, refer to the corresponding implementation process in the above methods for details, which will not be described repeatedly herein.

In another embodiment, the apparatus includes a constructing unit and a sending unit, where the function of the constructing unit is described above, and the sending unit may be integrated in a transmitter or be deployed independently, and the function thereof is as described of the transmitter. For details, refer to the above description, which will not be described repeatedly herein.

FIG. 6 is a schematic structural diagram of an apparatus for updating a forwarding table according to an embodiment of the present invention. The apparatus is used to implement the method shown in FIG. 2. The apparatus includes a receiver 61, a determining unit 62, and a updating unit 63, where the receiver 61 is configured to receive a topology change (TC) packet sent by a first switch in a ring network, where the TC packet includes a fault identifier, and the fault identifier may include a protocol type, a domain identifier, a ring identifier, a protection instance, a hold time, and a system bridge media access control (MAC) address, but is not limited thereto; the determining unit 62 is configured to determine whether a second switch in the ring network has buffered the fault identifier; and the updating unit 63 is configured to update, when the determining unit 62 determines that the second switch has not buffered the fault identifier, a forwarding table according to the fault identifier.

In another embodiment, the receiver may also be a receiving unit whose function is the same as that of the receiver. In addition, the receiving unit may also be integrated in the receiver.

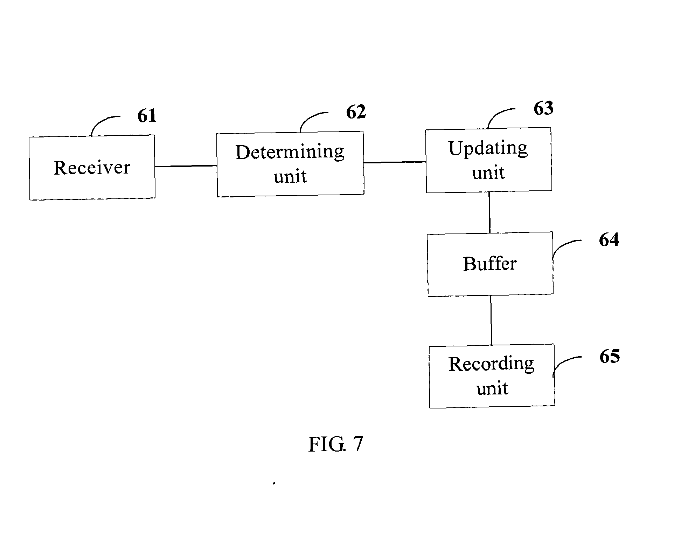

Optionally, the apparatus may further include a buffer 64 and a recording unit 65, where the buffer 64 is configured to buffer the fault identifier after the updating unit 63 updates the forwarding table; and the recording unit 65 is configured to record, when the buffer buffers the fault identifier, a time at which the fault identifier is received in an entry corresponding to the fault identifier. The schematic structural diagram thereof is shown in FIG. 7. FIG. 7 is a second schematic structural diagram of the apparatus for updating the forwarding table.

In another embodiment, the buffer may also be a buffering unit whose function is the same as that of the buffer. In addition, the buffering unit may also be integrated in the buffer.

Optionally, based on the embodiment shown in FIG. 7, the apparatus may further include an extracting unit 66, a traversing unit 67, and a processing unit 68, where the extracting unit 66 is configured to extract current system time; the traversing unit 67 is configured to traverse entries in the buffer; and the processing unit 68 is configured to determine, for each entry traversed by the traversing unit 67, whether a difference between the current system time and the time at which the fault identifier is received in the entry is greater than a hold time; if yes, delete the entry; otherwise, trigger the traversing unit to continue traversing the entries in the buffer.

For the implementation process of the functions and uses of the units in the apparatus, refer to the corresponding implementation process in the above methods for details, which will not be described repeatedly herein.

In the embodiments of the present invention, when a link in a ring network is faulty and after switches (uniformly referred to as first switches) on two sides of the fault point detect the fault, a TC packet including a fault identifier is constructed, and the TC packet is sent to a second switch; the second switch determines whether the fault identifier has been buffered therein according to the fault identifier in the TC packet, and if the fault identifier has not been buffered therein, updates a forwarding table maintained by the second switch, or if the fault identifier has been buffered therein, does not update the forwarding table maintained by the switch. Therefore, the embodiments of the present invention solve the problem in the prior art that a switch needs to update a forwarding table at least twice for the same fault, that is, the number of times for updating the forwarding table is reduced, thereby improving the efficiency for updating the forwarding table.

It should be noted that the relational terms herein such as first and second are used only to differentiate an entity or operation from another entity or operation, and do not require or imply any actual relationship or sequence between these entities or operations. Moreover, the terms "include", "comprise", and any variation thereof are intended to cover a non-exclusive inclusion. Therefore, in the context of a process, method, object, or device that includes a series of elements, the process, method, object, or device not only includes such elements, but also includes other elements not specified expressly, or may include inherent elements of the process, method, object, or device. If no more limitations are made, an element limited by "include a/an..." does not exclude other same elements existing in the process, the method, the article, or the device which includes the element.

According to the description of the embodiments, persons skilled in the art may clearly understand that the present invention may be implemented by software in addition to a necessary universal hardware platform or by hardware only. In most circumstances, the former is preferred. Based on such an understanding, the technical solutions in the present invention essentially, or the part contributing to the prior art may be implemented in the form of a software product. The computer software product is stored in a storage medium, such as ROM/ RAM, magnetic disk, and optical disk, and includes several instructions for instructing a computer device (which may be a personal computer, a server, a network device, and the like) to perform all or a part of steps of the methods described in the embodiments of the present invention.

The foregoing descriptions are merely exemplary embodiments of the present invention. It should be noted that various improvements and modifications made by persons of ordinary skill in the art within the principle of the present invention shall fall within the protection scope of the present invention.

## Claims

1. A method for sending a topology change packet, comprising:
when a first switch in a ring network detects that a link is faulty, constructing, by the first switch, a topology change, TC, packet, wherein the TC packet comprises a fault identifier; and
sending, by the first switch, the TC packet, so that a second switch in the ring network receiving the TC packet updates a forwarding table according to the fault identifier.

2. The method according to claim 1, wherein the sending the TC packet specifically comprises sending the TC packet once or consecutively sending the TC packet multiple times.

3. The method according to claim 1 or 2, wherein the fault identifier comprises a protocol type, a domain identifier, a ring identifier, a protection instance, a hold time, and a system bridge media access control, MAC, address.

4. A method for updating a forwarding table, comprising:
receiving, by a second switch in a ring network, a topology change, TC, packet sent by a first switch in the ring network, wherein the TC packet comprises a fault identifier; and
determining, by the second switch, whether the fault identifier has been buffered, and if the fault identifier has not been buffered, updating a forwarding table according to the fault identifier.

5. The method according to claim 4, wherein the fault identifier comprises a protocol type, a domain identifier, a ring identifier, a protection instance, a hold time, and a system bridge media access control, MAC, address.

6. The method according to claim 4, further comprising: if the fault identifier exists, not updating, by the second switch, the forwarding table.

7. The method according to any one of claims 4 to 6, further comprising, buffering, by the second switch, the fault identifier, and recording a time at which the fault identifier is received in an entry corresponding to the fault identifier.

8. The method according to claim 7, further comprising:
extracting, by the second switch, current system time;
traversing, by the second switch, entries in a buffer; and
for each entry, determining whether a difference between the current system time and a time at which the fault identifier in the entry is received is greater than the hold time; if yes, deleting the entry; otherwise, continuing traversing the entries in the buffer.

9. An apparatus for sending a topology change packet, comprising:
a constructing unit, configured to construct, when a first switch in a ring network detects that a link is faulty, a topology change, TC, packet, wherein the TC packet comprises a fault identifier; and
a transmitter, configured to send the TC packet, so that a second switch in the ring network receiving the TC packet updates a forwarding table according to the fault identifier.

10. The apparatus according to claim 9, wherein the transmitter is specifically configured to send the TC packet once or consecutively send the TC packet multiple times.

11. The apparatus according to claim 9 or 10, wherein the fault identifier comprises a protocol type, a domain identifier, a ring identifier, a protection instance, a hold time, and a system bridge media access control, MAC, address.

12. An apparatus for updating a forwarding table, comprising:
a receiver, configured to receive a topology change, TC, packet sent by a first switch in a ring network, wherein the TC packet comprises a fault identifier;
a determining unit, configured to determine whether a second switch in the ring network has buffered the fault identifier; and
a updating unit, configured to update, when the determining unit determines that the second switch has not buffered the fault identifier, a forwarding table according to the fault identifier.

13. The apparatus according to claim 12, further comprising:
a buffer, configured to buffer the fault identifier after the updating unit updates the forwarding table; and
a recording unit, configured to record, when the buffer buffers the fault identifier, a time at which the fault identifier is received in an entry corresponding to the fault identifier.

14. The apparatus according to claim 13, wherein the fault identifier buffered by the buffer comprises a protocol type, a domain identifier, a ring identifier, a protection instance, a hold time, and a system bridge media access control, MAC, address.

15. The apparatus according to claim 14, further comprising:
an extracting unit, configured to extract current system time;
a traversing unit, configured to traverse entries in the buffer; and
a processing unit, configured to determine, for each entry traversed by the traversing unit, whether a difference between the current system time and a time at which the fault identifier is received in the entry is greater than the hold time; if yes, delete the entry; otherwise, trigger the traversing unit to continue traversing entries in the buffer.
